# EUROPÄISCHE PATENTANMELDUNG

(11) **EP 1 245 364 A1**
(43) Veröffentlichungstag der Anmeldung: **02.10.2002**
(21) Anmeldenummer: 02006025.7
(22) Anmeldetag: 15.03.2002
(51) Int. Cl.: B29C 45/76

(54) **Produktionsmaschine**

(30) Priorität: 28.03.2001 DE 10115253
(71) Anmelder: SIEMENS AKTIENGESELLSCHAFT, 80333 München (DE)
(72) Erfinder: Hofmann, Werner, 91220 Schnaittach (DE)

(57) **Zusammenfassung**

Die Erfindung betrifft eine Produktionsmaschine mit hydraulischem und/oder elektrischem Antrieb (A), sowie einer Messdatenerfassung für mindestens eine Positionsbestimmung (P1,P2) und mindestens zwei hiervon in der Produktionsmaschine abhängigen Messgrößen. Eine Sollwertvorgabe wird bei Überschreitung eines weiteren Sollwertprofils direkt in Form einer ablösenden Steuerung oder Regelung korrigiert.

## Beschreibung

Die Erfindung bezieht sich auf eine Produktionsmaschine mit hydraulischem und/oder elektrischem Antrieb, sowie einer Messdatenerfassung für mindestens eine Positionsbestimmung und mindestens zwei hiervon in der Produktionsmaschine abhängigen Messgrößen.

Die Entwicklung und Anwendung einfacher, effektiver und zuverlässiger Produktionsmaschinen und deren Steuerungs- und Regelungsverfahren ist stets Antriebsfeder - so auch dieser Erfindung - zur Verbesserung von technischen Prozessen.

Aus EP 0 246 326 B1 ist ein Verfahren zur Steuerung eines Einspritzmechanismus einer Spritzgießmaschine bekannt. Über eine Kraftmessung an der Last oder über eine Einspritzdruckmessung wird einzig und allein eine Stromregelung einer Antriebsquelle vorgenommen.

Aufgabe der Erfindung ist es, eine Produktionsmaschine der eingangs genannten Art so auszubilden, dass eine positionsabhängige Sollwertvorgabe bei Überschreitung von weiteren positionsabhängigen Prozessgrößen um einen von der Überschreitung abhängigen Betrag gegensinnig mit einfachem und effektivem Durchgriff beeinflussbar ist.

Gemäß der Erfindung wird diese Aufgabe dadurch gelöst, dass eine erste positionsabhängige Sollwertermittlung vorgesehen ist, die in mindestens einem parallelen Steuerungs- oder Regelungszweig gegensinnig beeinflussbar ist, wobei eine Sollwertkorrektur aufgrund einer Überschreitung eines weiteren positionsabhängigen Sollwertprofils mindestens einer weiteren positionsabhängigen Messgröße vorgesehen ist. Somit wird ein weiterer Steuerungs- oder Regelungspfad in Form einer ablösenden Steuerung oder Regelung nur in Anspruch genommen, wenn das dort überwachte Prozessprofil überschritten wird.

Eine erste vorteilhafte Ausbildung der Erfindung, wobei die Produktionsmaschine als Kunststoffspritzgießmaschine ausgeführt ist, ist dadurch gekennzeichnet, dass der Einspritzdruck und die Position einer den Spritzgang treibenden Vortriebsschnecke als Messgrößen erfassbar sind und wobei als positionsabhängiger Sollwert mindestens ein Geschwindigkeits-Weg-Profil der Vortriebsschnecke vorgebbar ist, der bei Überschreitung eines Druck-Weg-Profils des Einspritzdrucks gegensinnig beeinflussbar ist. Durch diese Konstellation sind wesentliche Prozessparameter einer Kunststoffspritzgießmaschine zur Erzielung von qualitativ hochwertigen Kunststoffspritzgießprodukten in einfacher und effektiver Weise erfassbar und im Sinne einer optimalen Prozessführung beeinflussbar.

Eine weitere vorteilhafte Ausbildung der Erfindung, wobei mindestens zwei positionsabhängige Messgrößen eines Formwerkzeugs einer Kunststoffspritzgießform erfassbar sind, ist dadurch gekennzeichnet, dass als positionsabhängiger Sollwert mindestens ein Geschwindigkeits-Weg-Profil des Formwerkzeugs vorgebbar ist, der bei Überschreitung eines Schließdruck-Weg-Profils des Formwerkzeugs gegensinnig beeinflussbar ist. Durch eine Prozesssteuerung und -überwachung des Formwerkzeugs im Spritzgießzyklus wird eine Beschädigung oder gar Zerstörung im Betrieb als auch im Fehlerfall frühzeitig erkannt und vermieden.

Eine weitere vorteilhafte Ausbildung der Erfindung ist dadurch gekennzeichnet, dass mindestens zwei positionsabhängige Messgrößen eines Auswurfmechanismus von einem Formwerkzeug einer Kunststoffspritzgießform erfassbar sind und dass als positionsabhängiger Sollwert mindestens ein Geschwindigkeits-Weg-Profil des Auswurfmechanismus vorgebbar ist, der bei Überschreitung eines Auswurfkraft-Weg-Profils des Auswurfmechanismus gegensinnig beeinflussbar ist. Durch eine Prozesssteuerung und -überwachung des Auswurfmechanismus wird eine Beschädigung oder gar Zerstörung des Auswurfmechanismus oder des Kunststoffsritzgießteils frühzeitig erkannt und vermieden.

Eine weitere vorteilhafte Ausbildung der Erfindung ist dadurch gekennzeichnet, dass alternativ oder additiv zu einem Geschwindigkeits- oder Messgrößen-Weg-Profil ein Geschwindigkeits- oder Messgrößen-Zeit-Profil vorgebbar ist. Je nach Eignung kann somit ein Weg- oder Zeit-Profil zur optimalen Prozessüberwachung oder -steuerung eingesetzt werden.

Eine weitere vorteilhafte Ausbildung der Erfindung ist dadurch gekennzeichnet, dass alternativ oder additiv zu einem Geschwindigkeits- oder Messgrößen-Weg- oder Zeit-Profil ein physikalisch oder technologisch verknüpftes Weg- oder Zeit-Profil vorgebbar ist. Somit sind je nach Eignung physikalisch oder technologisch verknüpfte Prozessgrößen zur Programmierung oder Visualisierung verwendbar.

Eine weitere vorteilhafte Ausbildung der Erfindung ist dadurch gekennzeichnet, dass die Merkmale nach einem der Ansprüche 2 bis 6 von einer Kunststoffspritzgießmaschine auf eine industrielle Presseneinrichtung übertragen sind. Bei einer industriellen Presseneinrichtung gibt es technologisch ähnliche Prozessparameter, wie sie auch bei einer Kunststoffspritzgießmaschine auftreten. Diese sind gemäß der Erfindung vorteilhaft überwach- und steuerbar.

Ein vorteilhaftes Verfahren zur Steuerung einer Produktionsmaschine mit hydraulischem oder elektrischem Antrieb, sowie mit jeweils einer Messdatenerfassung für mindestens eine Positionsbestimmung und mindestens zwei hiervon in der Produktionsmaschine abhängigen Messgrößen ist dadurch gekennzeichnet, dass
- mindestens eine Istposition eines Bewegungssystem erfasst wird,
- über mindestens ein Geschwindigkeits-Weg-Profil oder ein von der Geschwindigkeit abgeleitetes Weg-Profil eine Sollwertvorgabe erfolgt und
- in einem weiteren Steuerungszweig mit mindestens einem weiteren positionsabhängigen Messgrößen-Weg-Profil die Sollwertvorgabe bei Überschreiten dieses zweiten Profils gegensinnig beeinflusst wird.

Mit diesem Verfahren werden Messgrößen und Sollwertvorgaben einer Produktionsmaschine mit einfachem und effektivem Durchgriff überwacht.

Ein vorteilhaftes Verfahren zur Steuerung einer Kunststoffspritzgießmaschine mit hydraulischem oder elektrischem Antrieb, sowie mit jeweils einer Messdatenerfassung für eine Positionsbestimmung einer Vortriebsschnecke und für eine Vortriebsschneckengeschwindigkeit oder für eine Einspritzgeschwindigkeit und für einen Einspritzdruck ist dadurch gekennzeichnet, dass
- mindestens eine Istposition eines Bewegungssystems erfasst wird,
- über mindestens ein Geschwindigkeits-Weg-Profil oder ein von der Geschwindigkeit abgeleitetes Weg-Profil eine Sollwertvorgabe erfolgt und
- in einem weiteren Steuerungszweig mit einem weiteren positionsabhängigen Messgrößen-Weg-Profil die Sollwertvorgabe bei Überschreiten dieses zweiten Profils gegensinnig beeinflusst wird.

Mit diesem Verfahren können unterschiedlichste Parameter und Sollwertvorgaben einer Kunststoffspritzgießmaschine einfach und effektiv überwacht und vorgegeben werden.

Ein vorteilhaftes Verfahren zur Steuerung eines Formwerkzeugs einer Kunststoffspritzgießmaschine mit hydraulischem oder elektrischem Antrieb, sowie mit jeweils einer Messdatenerfassung für eine Positionsbestimmung des Formwerkzeugs und für eine Schließ- und/oder Öffnungsgeschwindigkeit und für einen Öffnungs- und/oder Schließdruck ist dadurch gekennzeichnet, dass
- mindestens eine Istposition eines Bewegungssystems erfasst wird,
- über mindestens ein Geschwindigkeits-Weg-Profil oder ein von der Geschwindigkeit abgeleitetes Weg-Profil eine Sollwertvorgabe erfolgt und
- in einem weiteren Regelungszweig mit mindestens einem weiteren positionsabhängigen Messgrößen-Weg-Profil die Sollwertvorgabe bei Überschreiten dieses zweiten Profils gegensinnig beeinflusst wird.

Mit diesem Verfahren kann die optimale Funktionsfähigkeit eines Formwerkzeugs einer Kunststoffspritzgießmaschine gesteuert und überwacht werden.
Ein vorteilhaftes Verfahren zur Steuerung eines Auswurfmechanismus von einem Formwerkzeug einer Kunststoffspritzgießmaschine mit hydraulischem oder elektrischem Antrieb, sowie mit jeweils einer Messdatenerfassung für eine Positionsbestimmung und für eine Geschwindigkeit und für eine Auswurfkraft des Auswurfmechanismus ist dadurch gekennzeichnet, dass
- mindestens eine Istposition eines Bewegungssystems erfasst wird,
- über mindestens ein Geschwindigkeits-Weg-Profil oder ein von der Geschwindigkeit abgeleitetes Weg-Profil eine Sollwertvorgabe erfolgt und
- in einem weiteren Steuerungszweig mit mindestens einem weiteren positionsabhängigen Messgrößen-Weg-Profil die Sollwertvorgabe bei Überschreiten dieses zweiten Profils gegensinnig beeinflusst wird.

Mit diesem Verfahren kann in besonderer Weise ein Auswurfmechanismus in Bezug auf dessen optimalen Betrieb und ein Kunststoffspritzgießteil auf dessen unbeschädigten Formauswurf gesteuert und überwacht werden.

Ein weiteres vorteilhaftes Verfahren ist dadurch gekennzeichnet, dass alternativ oder additiv zu einem Geschwindigkeitsoder Messgrößen-Weg-Profil ein Geschwindigkeits- oder Messgrößen-Zeit-Profil verwendet wird. Somit kann zur einfachen und übersichtlichen Programmierung oder Visualisierung ein günstiges Profil ausgewählt werden.

Ein weiteres vorteilhaftes Verfahren der Erfindung ist dadurch gekennzeichnet, dass alternativ oder additiv zu einem Geschwindigkeits- oder Messgrößen-Weg- oder Zeit-Profil ein physikalisch oder technologisch verknüpftes Weg- oder Zeit-Profil vorgegeben wird. Zur Sollwertvorgabe, Überwachung oder auch Visualisierung von Messgrößen können somit optimal physikalisch oder technologisch beschreibende Prozessgrößen eingesetzt werden.

Ein weiteres vorteilhaftes Verfahren zur Steuerung einer Produktionsmaschine ist dadurch gekennzeichnet, dass die Merkmale nach einem der Ansprüche 9 bis 13 nicht in einer Kunststoffspritzgießmaschine, sondern in einer industriellen Presseneinrichtung angewendet werden. Aufgrund einer technologischen Verwandtschaft kann das bei einer Kunststoffspritzgießmaschine eingesetzte Verfahren vorteilhaft auch auf eine industrielle Presseneinrichtung übertragen werden.

Ein Ausführungsbeispiel der Erfindung ist in der Zeichnung dargestellt und wird im folgenden näher erläutert. Dabei zeigen :
- FIG 1: eine symbolische Seitenansicht einer Kunststoffspritzgießmaschine, bei der das Schneckengehäuse, sowie das Formwerkzeug geschnitten dargestellt sind,
- FIG 2: ein prinzipielles Funktionsblockdiagramm zur Produktionsmaschinensteuerung mit mindestens zwei voneinander abhängigen Messgrößen und
- FIG 3: beispielhafte Ist- und Sollwertgraphen einer Kunststoffspritzgießmaschine.

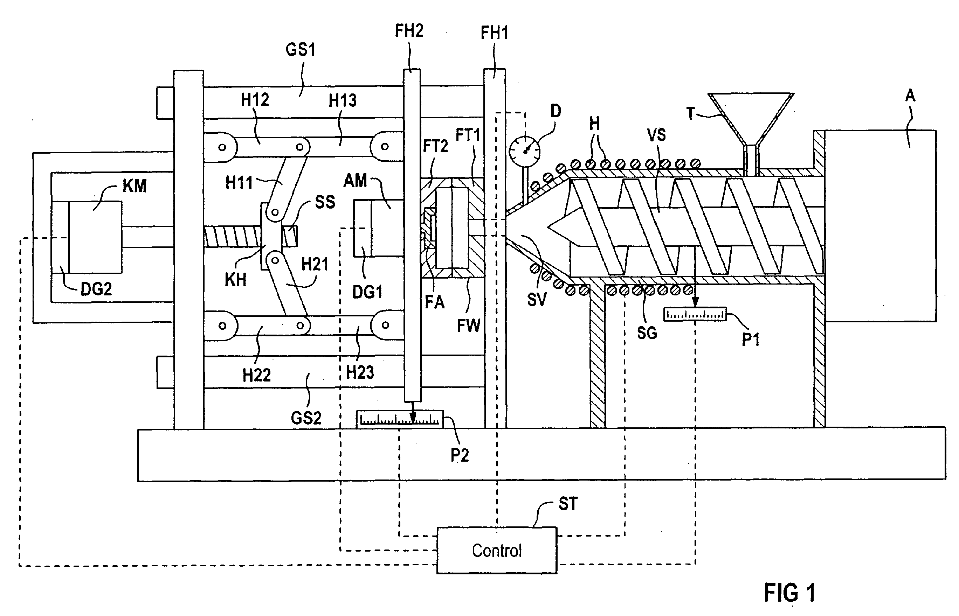

In der Darstellung gemäß FIG 1 ist in Form einer Seitenansicht eine Kunststoffspritzgießmaschine dargestellt. Ein der Übersichtlichkeit halber nicht dargestelltes Kunststoffgranulat gelangt über einen Trichter T in ein Schneckengehäuse SG und wird von einer Vortriebsschnecke VS, die von einem Antrieb A bewegt wird, in das Formwerkzeug FW befördert. Entlang des Schneckengehäuses SG befinden sich Heizwendeln H, die das Kunststoffgranulat auf ihrem Beförderungsweg erwärmen und im Schneckenvorraum SV als plastifiziertes Kunststoffmaterial vorliegen lassen.

Um eine hohe Produktionsgeschwindigkeit von Kunststoffspritzgießteilen zu erreichen, ist anzustreben, mit einer hohen Einspritzgeschwindigkeit in das Formwerkzeug FW zu arbeiten. Mit Hilfe eines Druckaufnehmers D wird der auf das plastifizierte Material ausgeübte Einspritzdruck im Schneckenvorraum SV von einer Steuerung ST oder auch einer Regelung überwacht.

Die Drucküberwachung mit einem Druckaufnehmer D kann an weiteren geeigneten Maschinenpositionen, wie beispielsweise im Maschinenachslager, erfolgten.

Die Überschreitung eines bestimmten Druckwertes führt zu einer irreversiblen und nicht gewünschten Materialeigenschaftsänderung des plastifizierten Materials. Der im Schneckenvorraum SV aufgebaute Einspritzdruck wird maßgeblich durch die vom Antrieb A hervorgerufene Vorwärtsbewegung der Vortriebsschnecke VS weitergegebene Drehmoment bestimmt. Der Antrieb A kann aus mehreren Motoren bestehen, die mit Hilfe eines Übertragungsmechanismus getrennt eine Dreh- und/oder Vorwärtsbewegung der Vortriebsschnecke VS hervorrufen.

Eine Positionsbestimmung P1 übermittelt an eine Steuerung ST, in FIG 1 mit "Control" bezeichnet, Information über die Istposition der Vortriebsschnecke VS. Sämtliche von der Steuerung ST erfasste Messgrößen sind durch gestrichelte Verbindungslinien angedeutet. Die Positionsbestimmung P1 kann beispielsweise durch einen Drehgeber oder auch durch einen Linearwegaufnehmer realisiert werden.

In einer Kunststoffspritzgießmaschine ist auch eine Heiztemperaturüberwachung und -regelung von Interesse, da auch eine Überhitzung des plastifizierten Materials zu unerwünschten Materialeigenschaftsänderungen führt. Auch die Heiztemperaturüberwachung kann Teil einer Prozessüberwachung der Erfindung sein, indem beispielsweise ein vom Produktionszyklus abhängiges Temperatur-Zeit-Profil als Sollwertvorgabe der Heizung eingespeist wird. In FIG 1 ist deshalb eine gestrichelte Verbindungslinie zwischen den Heizwendeln H und der Steuerung ST dargestellt.

Während des Einspritzvorgangs wird das plastifizierte Material üblicherweise mit einer bestimmten Geschwindigkeit in das Formwerkzeug SW eingespritzt. Eine unvermindert anhaltende Einspritzgeschwindigkeit führt zu einem sehr steil verlaufenden Druckanstieg im Schneckenvorraum SV. Durch die Erfindung kann eine schnelle Reaktion auf diesen Druckanstieg erfolgen, in dem in Form einer ablösenden Regelung oder Steuerung auf die Stellgröße direkt eingewirkt wird.

Nachdem das Formwerkzeug FW mit plastifiziertem Material gefüllt ist, beginnt der Erstarrungsvorgang. Der hierbei einsetzende Schrumpfungsvorgang ist durch Nachdrücken von weiterem Kunststoffmaterial auszugleichen.

Sind der Einspritz- und Erstarrungsvorgang komplett abgeschlossen, wird das Formwerkzeug FW auseinanderbewegt, das aus den Formteilen FT1 und FT2 steht. Das Formteil FT1 ist an der Formwerkzeughalterung FH1 befestigt und wird nicht bewegt. Das Formteil FT2 ist an der Formwerkzeughalterung FH2 befestigt und kann horizontal von dem Formteil FT1 entfernt werden. Mit Hilfe eines Kniehebelmechanismus gleitet die Formwerkzeughalterung FH2 auf den Gleitschienen GS1 und GS2 horizontal von dem Formteil FT1 weg. Der Kniehebelmechanismus besteht in FIG 1 aus einer Kniehebelmutter KH und jeweils drei hierzu symmetrisch angeordneten Hebelstücken H11 bis H13, sowie H21 bis H23. In weiteren Ausführungen kann der Kniehebelmechanismus aus einer Vielzahl von Hebelstücken bestehen, sowie alternativ hydraulisch und/oder hydromechanisch angetrieben sein.

Mit Hilfe eines Kniehebelmotors KM wird eine Spindelschraube SS angetrieben, die die Kniehebelmutter KH horizontal bewegt und dabei die Hebelstücke H11 bis H23 derart mitnimmt, dass die Formwerkzeughalterung FH2 horizontal bewegt wird.

Eine Positionsbestimmung P2, die beispielsweise als linearer Wegaufnehmer ausgebildet sein kann, übermittelt die Istposition der Formwerkzeughalterung FH2 an die Steuerung ST.

Um die Position der Kniehebelmutter KH zu bestimmen, ist ein Drehgeber DG2 am Kniehebelmotor KM befestigt, der seine Information an die Steuerung ST weitergibt.

Um die Kunststoffspritzgießteile nach dem Erstarren aus dem Formwerkzeug FW entfernen zu können, befindet sich im Formteil FT2 ein Formteilauswurf FA. Dieser wird durch einen Auswurfmechanismusmotor AM angetrieben und drückt das auszuwerfende Kunststoffprodukt aus dem Formteil FT2. An dem Auswurfmechanismusmotor AM ist ebenso ein Drehgeber DG1 befestigt, der die Position des Formteilauswurfs FA bestimmt. Ein weiterer Auswurfmechanismus kann sich am Formteil FT1 befinden.

Durch eine Kombination eines Motors KM, AM, A mit einem Drehgeber DG1, DG2 bzw. mit einer Positionsbestimmung P1, P2, können verschiedene Messgrößen erfasst werden. Es ist möglich, die Position selber, die während einer Zeit zurückgelegten Strecke, als auch das Drehmoment des jeweiligen Motors KM, AM, A zu erfassen. Damit ist es beispielsweise möglich, die Position des Formteilauswurfs FA zu bestimmen, als auch die auf das Kunststoffprodukt ausgeübte Kraft, die sich durch eine Umrechnung des gemessenen Drehmoments ergibt.

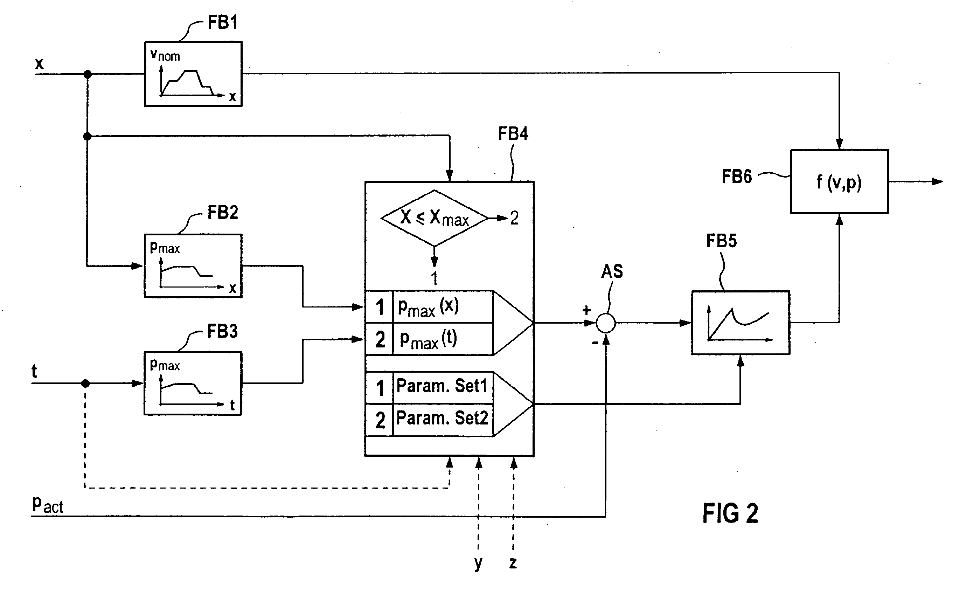

In der Darstellung gemäß FIG 2 ist ein Funktionsblockdiagramm zur Produktionsmaschinensteuerung dargestellt. Eine Maschinenkoordinate in FIG 2 mit "x" bezeichnet wird einem Funktionsblock FB1 zugeführt, der einen positionsabhängigen Sollwert ermittelt. Dieser Sollwert wird in einem Funktionsblock FB6 in einen Maschinensteuerungsparameter umgesetzt ("nₙₒₘ").

In einem weiteren Funktionsblock FB2 wird ein ebenfalls positionsabhängiges Sollwertprofil ausgegeben. Dieses Sollwertprofil wird durch einen Funktionsblock FB4 geleitet, wenn im Fall eines wegabhängigen Profils eine bestimmte Wegmarke "xₘₐₓ" nicht überschritten wurde. Im Funktionsblock FB4, dem auch die Maschinenkoordinaten "x" zugeführt werden, ist dies durch einen rautenförmigen Entscheidungsblock gekennzeichnet. Ist eine definierte Maschinenposition "xₘₐₓ" überschritten, werden die mit "2" bezeichneten Variablen bzw. Parameter an die Additionsstelle AS weitergeleitet. An dieser wird von einem Funktionswert des Funktionsblocks FB4 ein Messparameter abgezogen. Die Subtraktion an der Additionsstelle AS ist durch ein Minuszeichen "-" gekennzeichnet.

Der mit dem Funktionsblock FB3 zusammenhängende Prozesspfad steht in Zusammenhang mit einer Kunststoffspritzgießmaschine und muss nicht in dieser Form für andere Produktionsmaschinen gelten. In ihm ist ein zeitabhängiges Sollwertprofil hinterlegt.

An der Additionsstelle AS werden Differenzsignale, die durch ein Sollwertprofil und aktuelle Messwerte "p_{act}" gebildet werden, an den Funktionsblock FB5 weitergeleitet. Dieser modelliert mit seinen programmierten Eigenschaften die Regelungsoder Steuerungsstrecke. Er erhält seine Regelungs- oder Steuerungsparameter für die Strecke als Parametersatz von dem Funktionsblock FB4. Der Funktionsblock FB5 gibt ein Sollwertkorrektursignal an den Funktionsblock FB6 aus.

Sämtliche Datenverbindungen in der Darstellung gemäß FIG 2 sind als Pfeilverbindungen ausgebildet und symbolisieren einen gerichteten Datenfluss. Ein Zeiteinheitssignal "t" steht in dem dargestellten Funktionsblockdiagramm zur Verfügung und wird dem Funktionsblock FB3 zugeleitet. Eine gestrichelte Verbindung zwischen dem Zeiteinheitssignal "t" und dem Funktionsblock FB4 soll andeuten, dass die maschinenpositionsabhängige Entscheidung im Funktionsblock FB4 auch durch eine zeitabhängige Entscheidung ersetzt werden kann. Dies bedeutet, dass nach Ablauf einer bestimmten Zeit "t" anstelle der mit "1" bezeichneten Daten die mit "2" bezeichneten Daten verarbeitet werden. Ebenso können weitere Variablen oder Prozessparameter zu einer ein- oder mehrstufigen Umschaltung von Eingangs- und/oder Ausgangsdaten führen. Diese können mit einer bestimmten Wichtung oder Funktion den Umschaltzeitpunkt herbeiführen. Dies ist in FIG 2 durch gestrichelt dargestellte Pfeile am Funktionsblock FB4 mit der Bezeichnung "y", "z" dargestellt.

Im folgenden soll das eben vorgestellte Funktionsblockdiagramm auf eine Kunststoffspritzgießmaschine angewendet werden. Die Positionsbestimmung P1 der Vortriebsschnecke VS liefert das Eingangssignal "x" für den Funktionsblock FB1. Dieser gibt abhängig von der Vortriebsschnecke VS einen Geschwindigkeitssollwert an den Funktionsblock FB6 weiter. Dieser setzt den Geschwindigkeitssollwert in eine Solldrehzahl "nₙₒₘ" für den Antrieb A um.

Im Funktionsblock FB2 ist ein positionsabhängiges Drucksollwertprofil hinterlegt, das an die Additionsstelle AS weitergeleitet wird, solange eine bestimmte Position "xₘₐₓ" nicht überschritten ist. Der aktuelle Einspritzdruck im Schneckenvorraum SV wird durch den Druckaufnehmer D ermittelt und der Steuerung als "p_{act}" zur Verfügung gestellt. An der Additionsstelle AS wird der aktuelle Druck von dem Drucksollwertprofil abgezogen und das Differenzsignal an den Funktionsblock FB5 weitergeleitet. Nur wenn das positionsabhängige Drucksollwertprofil aus dem Funktionsblock FB2 mit dem aktuellen Druckwert überschritten wird, greift die ablösende Steuerung korrigierend ein. In dem Funktionsblock FB6 wird ein Korrektursignal verarbeitet und ein neuer Sollwert bereitgestellt. Die Solldrehzahl des Antriebs A wird in diesem Fall zurückgenommen.

Ab einer bestimmten Wegmarke der Vortriebsschnecke VS ist das Formwerkzeug FW mit plastifiziertem Material gefüllt und die Einspritzgeschwindigkeit ist zurückzunehmen, um einen unzulässigen Druckanstieg im Schneckenvorraum SV zu vermeiden. Ist die aktuelle Position der Vortriebsschnecke VS gleich der Position "xₘₐₓ", so schaltet der Funktionsblock FB4 auf einen Datenpfad "2" um. Zur Additionsstelle AS wird nun ein zeitabhängiges Drucksollwertprofil des Funktionsblocks FB3 übermittelt. Da das Formwerkzeug FW gefüllt ist, ändern sich auch die Streckenparameter für die Steuerung ST. Nun wird ebenso ein mit "2" bezeichneter Parametersatz, in FIG 2 durch "Param.Set2" gekennzeichnet, an den Funktionsblock FB5 übermittelt. Hierdurch wird ein getrenntes Sollwertprofil für eine Einspritz- und eine Nachdruckphase bereitgestellt. Weitere Variablen oder Prozessparameter können zur Bestimmung eines Umschaltzeitpunktes einer Kunststoffspritzgießmaschine mit einer bestimmten Wichtung oder Funktion hinzugezogen werden. Diese Variablen können beispielsweise eine Vortriebsschneckenistposition, ein Einspritzdruck oder eine Produktionszykluszeit sein.

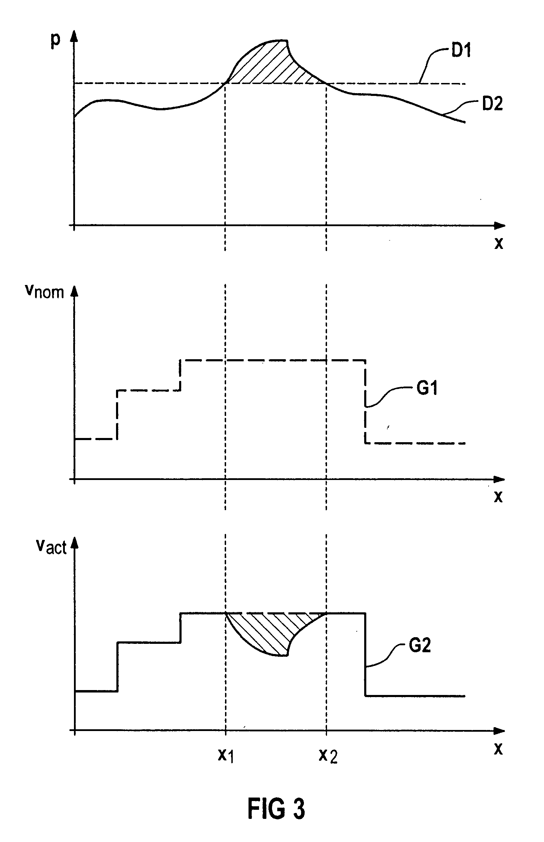

In der Darstellung gemäß FIG 3 sind Ist- und Sollwertgraphen des eben genannten Zusammenhangs dargestellt. Dabei bezeichnen in einem p(x)-Diagramm eine horizontal gestrichelte Linie D1 eine Sollwertdruckkurve und eine durchgezogene Linie eine gemessene Druckkurve D2. Die vertikal gestrichelten Linien, die über weitere Diagramme verlaufen, grenzen einen x-Bereich zwischen x₁ und x₂ ein. In diesem Bereich verläuft die Druckkurve D2 über der Druckkurve D1. Die hierdurch aufgespannte Fläche in dem p(x)-Diagramm ist gestrichelt dargestellt.

Ein vₙₒₘ(x)-Diagramm zeigt eine Geschwindigkeitssollkurve G1, die gestrichelt dargestellt ist.

Ein v_{act}(x)-Diagramm stellt eine gemessene Geschwindigkeitskurve G2 dar. Diese spannt eine schraffierte Fläche mit einer gestrichelt dargestellten horizontalen Linie auf.

In dem durch die vertikalen gestrichelten Linien gekennzeichneten x-Bereich überschreitet der Einspritzdruck den vorgegebenen maximalen Druckverlauf D1. Das Geschwindigkeitssollwertprofil G1 ist in diesem Bereich konstant. Aufgrund der Überschreitung des Einspritzdrucks wird das Geschwindigkeitssollwertprofil G1 in dem gemäß FIG 2 beschriebenen ablösenden Steuerungszweig, gebildet aus den Funktionsblöcken FB2, FB4, FB5 und der Additionsstelle AS korrigiert. Somit wirkt die Messgröße, die ein vorgegebenes Profil überschreitet direkt auf einen Sollwert korrigierend ein.

Im übrigen sei noch erwähnt, dass oben beschriebene Sollwertkorrektur auch bei einer Unterschreitung von Sollwerten erfolgen kann. Ebenso ist denkbar, dass Sollwertbänder vorgegeben werden, so dass bei einem Herausscheren von Messwerten aus diesem Band korrigierend eingewirkt wird.

Weiterhin sei erwähnt, dass die Anwendung der beschriebenen Verfahren sich insbesondere auch für Produktionsmaschinen eignen, die unter anderem Weg und Druck als Prozessparameter besitzen. Hier sei beispielhaft eine industrielle Presseneinrichtung genannt.

Eine Presseneinrichtung stellt technologisch nichts anderes dar, als den Ausspritzmechanismus einer Kunststoffspritzgießmaschine, wobei selbstverständlich die Dimensionierungen bezüglich der zu steuernden oder zu regelnden Kräfte an den jeweiligen Anwendungsfall anzupassen sind.

## Patentansprüche

1. Produktionsmaschine mit hydraulischem und/oder elektrischem Antrieb (A), sowie einer Messdatenerfassung für mindestens eine Positionsbestimmung (P1,P2) und mindestens zwei hiervon in der Produktionsmaschine abhängigen Messgrößen,
**dadurch gekennzeichnet, dass** eine erste positionsabhängige Sollwertermittlung vorgesehen ist, die in mindestens einem parallelen Steuerungs- oder Regelungszweig gegensinnig beeinflussbar ist, wobei eine Sollwertkorrektur aufgrund einer Überschreitung eines weiteren positionsabhängigen Sollwertprofils mindestens einer weiteren positionsabhängigen Messgröße vorgesehen ist.

2. Produktionsmaschine nach Anspruch 1, wobei die Produktionsmaschine als Kunststoffspritzgießmaschine ausgeführt ist,
**dadurch gekennzeichnet, dass** der Einspritzdruck und die Position einer den Spritzvorgang treibenden Vortriebsschnecke (VS) als Messgrößen erfassbar sind und wobei als positionsabhängiger Sollwert mindestens ein Geschwindigkeits-Weg-Profil der Vortriebsschnecke vorgebbar ist, der bei Überschreitung eines Druck-Weg-Profils des Einspritzdrucks gegensinnig beeinflussbar ist.

3. Produktionsmaschine nach einem der vorstehenden Ansprüche, wobei mindestens zwei positionsabhängige Messgrößen eines Formwerkzeugs (FW) einer Kunststoffspritzgießform erfassbar sind, **dadurch gekennzeichnet, dass** als positionsabhängiger Sollwert mindestens ein Geschwindigkeits-Weg-Profil des Formwerkzeugs (FW) vorgebbar ist, der bei Überschreitung eines Schließdruck-Weg-Profils des Formwerkzeugs (FW) gegensinnig beeinflussbar ist.

4. Produktionsmaschine nach einem der vorstehenden Ansprüche,
**dadurch gekennzeichnet, dass** mindestens zwei positionsabhängige Messgrößen eines Auswurfmechanismus von einem Formwerkzeug (FW) einer Kunststoffspritzgießform erfassbar sind und dass als positionsabhängiger Sollwert mindestens ein Geschwindigkeits-Weg-Profil des Auswurfmechanismus vorgebbar ist, der bei Überschreitung eines Auswurfkraft-Weg-Profils des Auswurfmechanismus gegensinnig beeinflussbar ist.

5. Produktionsmaschine nach einem der vorstehenden Ansprüche,
**dadurch gekennzeichnet, dass** alternativ oder additiv zu einem Geschwindigkeits- oder Messgrößen-Weg-Profil ein Geschwindigkeits- oder Messgrößen-Zeit-Profil vorgebbar ist.

6. Produktionsmaschine nach einem der vorstehenden Ansprüche,
**dadurch gekennzeichnet, dass** alternativ oder additiv zu einem Geschwindigkeits- oder Messgrößen-Weg- oder Zeit-Profil ein physikalisch oder technologisch verknüpftes Weg- oder Zeit-Profil vorgebbar ist.

7. Produktionsmaschine nach Anspruch 1,
**dadurch gekennzeichnet, dass** die Merkmale nach einem der Ansprüche 2 bis 6 von einer Kunststoffspritzgießmaschine auf eine industrielle Presseneinrichtung übertragen sind.

8. Verfahren zur Steuerung einer Produktionsmaschine mit hydraulischem oder elektrischem Antrieb (A), sowie mit jeweils einer Messdatenerfassung für mindestens eine Positionsbestimmung (P1,P2) und mindestens zwei hiervon in der Produktionsmaschine abhängigen Messgrößen, **dadurch gekennzeichnet, dass**
8.1 mindestens eine Istposition eines Bewegungssystems erfasst wird,
8.2 über mindestens ein Geschwindigkeits-Weg-Profil oder ein von der Geschwindigkeit abgeleitetes Weg-Profil eine Sollwertvorgabe erfolgt und
8.3 in einem weiteren Steuerungszweig mit mindestens einem weiteren positionsabhängigen Messgrößen-Weg-Profil die Sollwertvorgabe bei Überschreiten dieses zweiten Profils gegensinnig beeinflusst wird.

9. Verfahren zur Steuerung einer Kunststoffspritzgießmaschine mit hydraulischem oder elektrischem Antrieb (A), sowie mit jeweils einer Messdatenerfassung für eine Positionsbestimmung (P1,P2) einer Vortriebsschnecke (VS) und für eine Vortriebsschneckengeschwindigkeit oder für eine Einspritzgeschwindigkeit und für einen Einspritzdruck, **dadurch gekennzeichnet, dass**
9.1 mindestens eine Istposition eines Bewegungssystems erfasst wird,
9.2 über mindestens ein Geschwindigkeits-Weg-Profil oder ein von der Geschwindigkeit abgeleitetes Weg-Profil eine Sollwertvorgabe erfolgt und
9.3 in einem weiteren Steuerungszweig mit einem weiteren positionsabhängigen Messgrößen-Weg-Profil die Sollwertvorgabe bei Überschreiten dieses zweiten Profils gegensinnig beeinflusst wird.

10. Verfahren zur Steuerung eines Formwerkzeugs (FW) einer Kunststoffspritzgießmaschine mit hydraulischem oder elektrischem Antrieb (A), sowie mit jeweils einer Messdatenerfassung für eine Positionsbestimmung (P1,P2) des Formwerkzeugs (FW) und für eine Schließ- und/oder Öffnungsgeschwindigkeit und für einen Öffnungs- und/oder Schließdruck, **dadurch gekennzeichnet, dass**
10.1 mindestens eine Istposition eines Bewegungssystems erfasst wird,
10.2 über mindestens ein Geschwindigkeits-Weg-Profil oder ein von der Geschwindigkeit abgeleitetes Weg-Profil eine Sollwertvorgabe erfolgt und
10.3 in einem weiteren Regelungszweig mit mindestens einem weiteren positionsabhängigen Messgrößen-Weg-Profil die Sollwertvorgabe bei Überschreiten dieses zweiten Profils gegensinnig beeinflusst wird.

11. Verfahren zur Steuerung eines Auswurfmechanismus von einem Formwerkzeug einer Kunststoffspritzgießmaschine mit hydraulischem oder elektrischem Antrieb (A), sowie mit jeweils einer Messdatenerfassung für eine Positionsbestimmung (P1, P2) und für eine Geschwindigkeit und für eine Auswurfkraft des Auswurfmechanismus, **dadurch gekennzeichnet, dass**
11.1 mindestens eine Istposition eines Bewegungssystems erfasst wird,
11.2 über mindestens ein Geschwindigkeits-Weg-Profil oder ein von der Geschwindigkeit abgeleitetes Weg-Profil eine Sollwertvorgabe erfolgt und
11.3 in einem weiteren Steuerungszweig mit mindestens einem weiteren positionsabhängigen Messgrößen-Weg-Profil die Sollwertvorgabe bei Überschreiten dieses zweiten Profils gegensinnig beeinflusst wird.

12. Verfahren nach den Ansprüchen 7 bis 10, **dadurch gekennzeichnet, dass** alternativ oder additiv zu einem Geschwindigkeits- oder Messgrößen-Weg-Profil ein Geschwindigkeits- oder Messgrößen-Zeit-Profil verwendet wird.

13. Verfahren nach den Ansprüchen 7 bis 12, **dadurch gekennzeichnet, dass** alternativ oder additiv zu einem Geschwindigkeits- oder Messgrößen-Weg- oder Zeit-Profil ein physikalisch oder technologisch verknüpftes Weg- oder Zeit-Profil vorgegeben wird.

14. Verfahren zur Steuerung einer Produktionsmaschine nach Anspruch 8, **dadurch gekennzeichnet, dass** die Merkmale nach einem der Ansprüche 9 bis 13 nicht in einer Kunststoffspritzgießmaschine, sondern in einer industriellen Presseneinrichtung angewendet werden.
